# EUROPÄISCHE PATENTSCHRIFT

(11) **EP 0 761 382 B1**
(45) Veröffentlichungstag und Bekanntmachung des Hinweises auf die Patenterteilung: **08.12.1999**
(21) Anmeldenummer: 96114253.6
(22) Anmeldetag: 05.09.1996
(51) Int. Cl.: B23Q 3/10, B25B 1/24

(54) **Einrichtung zur Lagefixierung von Teilen in Haltevorrichtungen**
Device for positioning pieces in clamping devices
Dispositif à positionner des pièces dans des dispositifs de serrage

(30) Priorität: 07.09.1995 DE 19532907
(43) Veröffentlichungstag der Anmeldung: 12.03.1997
(73) Patentinhaber: Lang, Günter, 73249 Wernau (DE)
(72) Erfinder: Lang, Günter, 73249 Wernau (DE)
(74) Vertreter: Patentanwälte Rüger, Barthelt & Abel

(56) Entgegenhaltungen:
- WO-A-92/14582
- US-A- 2 195 277
- US-A- 3 463 478
- US-A- 3 463 479
- US-A- 4 174 828

## Beschreibung

Die Erfindung betrifft eine Einrichtung zur lagefixierung von Teilen in Haltevorrichtungen. Derartige Haltevorrichtungen sind z.B. Maschinentische oder Schraubstöcke, in denen zu bearbeitende Teile lagegenau gehalten werden müssen, um eine genaue Bearbeitung dieser Teile z.B. durch Bohren, Fräsen oder Erodiervorgänge durchzuführen. Dabei werden immer höhere Anforderungen an die Genauigkeit bei der Bearbeitung gestellt, was auch eine immer genauere Lagefixierung der Werkstücke verlangt.

Es sind bereits Einrichtungen zur Lagefixierung bekannt, z.B. aus den Katalogen der Hersteller. Diese bekannten Einrichtungen bestehen aus einer mit Gewindebohrungen versehenen Grundplatte, die auf einem vorhandenen Maschinentisch befestigt wird, oder aus zwei Grundplatten, die in Aufnahmeleisten eines Schraubstocks gehalten werden. In die Gewindebohrungen werden bei diesen Einrichtungen gehärtete Präzisionsbolzen eingeschraubt, um als Auflageelemente zu dienen bzw. als Elemente, mittels denen die Lage der Teile, insbesondere auf einem Maschinentisch, festgelegt wird. Diese Einrichtungen haben den erheblichen Nachteil, daß die Rüstzeiten sehr hoch sind und damit wesentlich in die Kosten eingehen. Ein weiterer Nachteil besteht in der Verwendung von Gewinden zum Einschrauben der Teile. Da die Gewinde bei ständiger Benutzung ein Spiel aufweisen können, wird damit die Lagerung ungenau. Es kann sogar zur Zerstörung des Gewindes kommen, wenn etwa durch Unachtsamkeit eine Schrägkraft auf den eingeschraubten Bolzen auftritt.

Aus der US-A-4 174 828 ist eine Einrichtung zum Festklemmen von Werkstücken oder von Haltevorrichtungen für Werkstücke auf einem Stütztisch einer Werkzeugmaschine bekannt, die einen Tisch aufweist, in dem mehrere Öffnungen zur Aufnahme von Spannelementen, ein Zentrierstift sowie eine Vielzahl von Positionierungspins angeordnet sind. Der Zentrierstift und die Positionierungspins dienen zur Lagerung und Positionierung einer ein Werkstück tragenden Haltevorrichtung und werden pneumatisch aus dem Tisch heraus und pneumatisch in diesen hineingefahren. Die Unterseite der Haltevorrichtung ist mit einer Bohrung oder Nut, in die der Zentrierstift im ausgefahrenen Zustand hineingreift, sowie mit einer Vielzahl von Buchsen zur Aufnahme der Positionspins versehen.

Zum Einspannen der Haltevorrichtung oder eines Werkstücks werden ein oder mehrere Spannelemente, an deren äußerem Ende jeweils ein Anpressbalken angebracht ist, in die Aufnahmeöffnungen eingesetzt und mit einem darin angeordneten Kolben verbunden. Der Kolben sitzt in einem Zylinder und ist mit Druckluft beaufschlagbar. Bei Zufuhr von Druckluft wird der Kolben weiter in das Tischinnere hineinbewegt, wobei diese Bewegung über das Spannelement an den Anpressbalken weitergegeben wird. Auf diese Weise wird das Werkstück oder die Haltevorrichtung zwischen dem Anpressbalken und der Tischoberfläche festgeklemmt.

Da zur Gewährleistung einer sicheren Lagefixierung das Werkstück im allgemeinen an mehreren Stellen festgeklemmt wird, müssen mehrere Spannelemente in die jeweils passende Aufnahmeöffnungen eingeführt und darin befestigt werden.

Ausgehend von diesem Stand der Technik liegt der Erfindung die Aufgabe zugrunde, eine Einrichtung zur Lagefixierung von Teilen in Haltevorrichtuugen aufzuzeigen, die bei höchster Präzision die Lagefixierung bei minimalen Rüstaufwand ermöglicht und die gegen mechanische Beschädigungen weitgehendst geschützt ist.

Diese Aufgabe wird mit einer Einrichtung mit mindestens einem Grundkörper, der wenigstens eine als Werkstückanlagefläche dienende Planfläche aufweist, die von Bohrungen durchsetzt ist, die in im Grundkörper als Arbeitskammern ausgebildete Ausnehmungen münden, die mit den Bohrungen achsgleich angeordnet sind und einen größeren Durchmesser als die Bohrung aufweisen, und mit Paßstiften gelöst, die in den Bohrungen angeordnet und zwischen einer Arbeitsstellung, in der sie aus den Bohrungen herausragen, und einer Grundstellung, in der sie aus den Bohrungen nicht herausragen, verschiebbar gelagert sind. In dem Grundkörper ist wenigstens ein Druckbeaufschlagungskanal zur Zuführung des Mediums zu der Arbeitskammer vorgesehen, so daß die Paßstifte von der Arbeitskammer aus durch unter Druck stehendes Medium aus ihrer Grundstellung heraus in die Arbeitsstellung, in der sie aus dem Grundkörper herausragen, verschiebbar sind. Jede Arbeitskammer ist mit lediglich einem Druckbeaufschlagungskanal verbunden, so daß die Paßstifte zwar durch Zufuhr des Mediums aus ihrer Grundstellung in ihre Arbeitsstellung überführbar, jedoch von Hand aus ihrer Arbeitsstellung in ihre Grundstellung zurück zu überführen sind.

Hiermit wird eine Einrichtung aufgezeigt, die mit einer vorgegebenen Halteeinrichtung verbunden eine genaue Lagefixierung der einzuspannenden Werkstücke ermöglicht. Dies geschieht dadurch, daß mittels des Mediums die Paßstifte ausgefahren werden und daß sodann die nicht zur Lagerung benötigten Paßstifte von Hand zurückgedrückt werden, so daß nur die Paßstifte aus dem Grundkörper herausragen, auf die das zu bearbeitende Werkstück aufgebracht wird.

Da gemäß einer Weiterführung der Grundkörper mehrere Reihen von Paßstiften aufweisen kann, ist es auch möglich, Winkelanschläge zu bilden. So können Winkelanschläge von 30°, 45°, 60° und 90° gebildet werden.

Durch eine reibschlüssige Scheibe an jedem der Paßstifte an seinem in die Arbeitskammer ragenden Abschnitt wird die Krat der Bewegung des jeweiligen Paßstiftes so übertragen, dass ein schonendes und doch sicheres Herausfahren der Paßstifte erfolgt. Der gemäß einer zweckmäßigen Ausgestaltung vorgesehene Deckel an der Seite des Grundkörpers, der die Ausnehmung enthält, wird eine eindeutige Führung des zur Paßstiftbewegung erforderlichen Mediums erreicht. Dieser Deckel kann auch der Befestigung des Grundkörpers auf der Haltevorrichtung dienen. Wenn als Haltevorrichtung ein Schraubstock od. dergl. verwendet wird, sind gemäß einer Weiterführung zwei Grundkörper zu verwenden, die an den Schraubstockbacken oder einem Äquivalent befestigt werden, z.B. durch Verschrauben oder Festklemmen oder mittels Pratzen. Um eine genaue Ausrichtung und achsgleiche Anordnung der Paßstifte zu erreichen, die genau gegenüberliegen müssen, kann einer der beiden Grundkörper einen Signalsender aufweisen und der andere Grundkörper einen Signalempfänger, so daß eine genaue Zuordnung der die Paßstifte tragenden Grundkörper zueinander erreicht wird. Anstelle der Sender/Empfänger-Anordnung kann auch der eine Grundkörper einen gegenüber den anderen Paßstiften längeren Paßstift aufweisen, der andere Grundkörper eine freie Bohrung, in welche zur Lagefixierung der längere Paßstift durch Heranführen des Grundkörpers eingefahren wird.

Gemäß einer noch weiteren Ausgestaltung können die Paßstifte auch der Aufnahme von ebenen Auflageplatten dienen. Diese Auflageplatten weisen bei beliebiger Kontur Bohrungen entsprechend den Paßstiften auf, d.h. mit gleichem Durchmesser und gleichem Abstand. Diese Auflageplatten werden auf die der Lage der Auflageplatte entsprechenden Paßstifte einfach aufgesetzt, um so das Anwendungsgebiet für aufzunehmende zu bearbeitende Werkstücke zu erweitern. Diese Auflageplatten können unterschiedlich geneigte Flächen aufweisen, z.B. Winkel von 5° oder 10°, oder z.B. für die Aufnahme von Rohren halbkreisförmige Ausschnitte, in die das zu haltende Werkstück gelegt werden kann. Da grundsätzlich jede Kontur möglich ist, können auch Werkstücke mit komplizierter Kontur gehalten werden.

Der Vorteil der erfindungsgemäßen Einrichtung besteht darin, daß sie eine exakte Lagefixierung von zur Bearbeitung bestimmten Teilen darstellt, die gegenüber den Einrichtungen nach dem Stand der Technik die Rüstzeit erheblich verkürzt und daß sie besonders vielseitig verwendbar ist.

In den Figuren 1 bis 7 sind Ausführungsbeispiele vereinfacht und schematisch dargestellt. Es zeigt:
- Fig. 1: die Einrichtung in der Grundstellung im Schnitt,
- Fig. 2: die Einrichtung nach Fig. 1 in Arbeitsstellung,
- Fig. 3: die Einrichtung als Plattenausführung auf einem angedeuteten Maschinentisch,
- Fig. 4: die Einrichtung als Winkelführung auf einem angedeuteten Maschinentisch,
- Fig. 5: die Einrichtung als Spannbackenausführung mit aufgelegtem Teil in einem Schraubstock in Seitenansicht,
- Fig. 6: die Einrichtung nach Fig. 5 in perspektivischer Ansicht und
- Fig. 7: eine Auflageplatte.

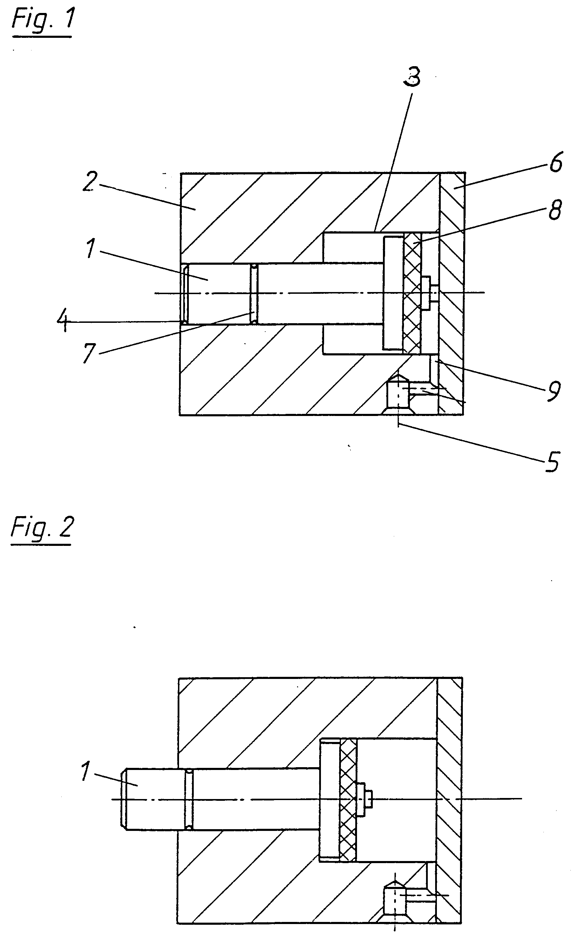

Die Fig. 1 zeigt eine Einrichtung mit nur einer Reihe von Paßstiften 1 in einem Querschnitt. Sie zeigt einen Grundkörper 2 mit parallelen Seitenflächen und Ausnehmungen 3 in der Stirnseite. Diese Ausnehmungen 3 sind zentrisch zu Bohrungen 4, in die die Paßstifte 1 eingesetzt sind und haben einen größeren Durchmesser als die Paßstifte 1. Der Grundkörper 2 weist ferner diese Bohrungen 4 zur Aufnahme jeweils eines Paßstiftes 1 auf, ferner einen Anschluß 5 zur Einleitung eines Mediums, vorzugsweise Luft, in die Ausnehmungen 3. Die die Ausnehmungen 3 aufweisende Seite des Grundkörpers 2 ist im Ausführungsbeispiel mit einem planparallelen Deckel 6 versehen, um die Ausnehmung 3 gegen Austritt des vorzugsweise pneumatischen Mediums zu schützen. Dabei ist zwischen den Ausnehmungen 3 und dem Deckel 6 ein Kanal 9 gebildet, um das Medium, z.B. Druckluft, zu den Ausnehmungen 6 zu leiten. Der Deckel 6 kann auch - nicht dargestellte - Elemente zur Befestigung an einem Halteelement aufweisen. Der Grundkörper 2 kann aber auch über bekannte Halteelemente auf einem Maschinentisch befestigt sein. In die Bohrung 4 des Grundkörpers 2 sind die Paßstifte 1 eingebracht und werden von der Seite der jeweiligen Ausnehmung 3 aus eingesetzt. Diese Paßstifte 1 weisen im mittleren Bereich eine Sollbruchstelle 7 auf. Durch diese wird eine Beschädigung der Bohrung 4 im Fall einer unsachgemäßen Behandlung verhindert, da eher der Paßsfift 1 an der vorgegebenen Stelle bricht, als das es zu einer Beschädigung der Bohrung kommt. An der in die jeweilige Ausnehmung ragenden Seite ist an den Paßstift 1 eine reibschlüssige Scheibe 8 angeordnet, z.B. aufgeschraubt.

Der Paßstift 1 kann in seinem im Betriebszustand den Grundkörper 2 überragenden Abschnitt ein Profil, z.B. eine Rille aufweisen, falls das zu fixierende Teil es verlangt. Üblich sind jedoch bei der Erfindung runde Paßstifte 1. Sie können jedoch in den herausragenden Abschnitt eine bestimmte Rauhigkeit aufweisen, was für die Aufnahme des zu fixierenden Teiles günstig sein kann.

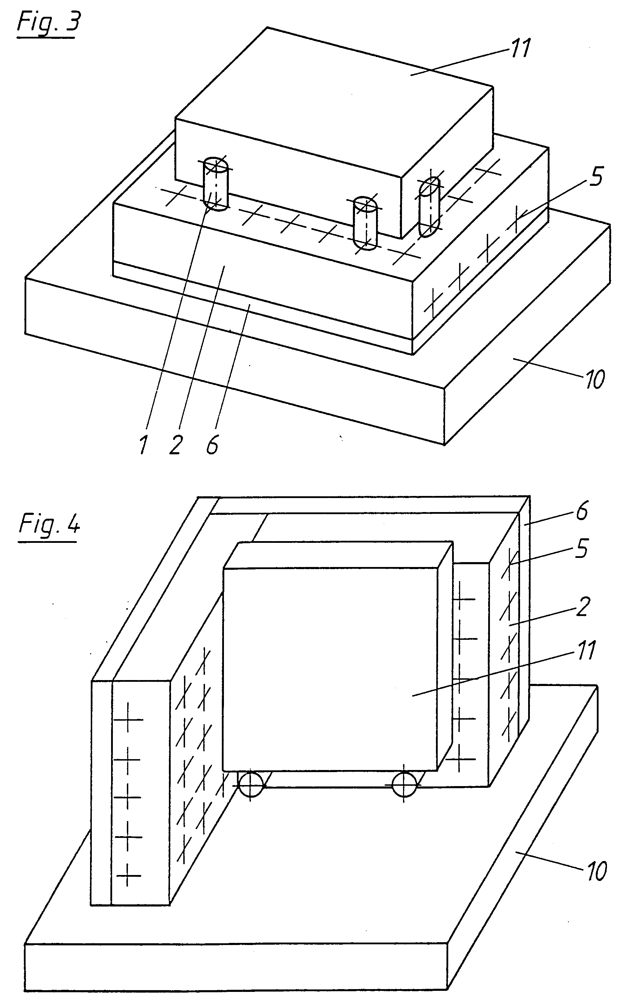

Für die Lagefixierung von Teilen wird ein Medium, z.B. Druckluft, über den Anschluß 5 und den Kanal 9 der Ausnehmung 3 zugeführt und wirkt auf die mit den Paßstiften 1 verbundene reibschlüssige Scheibe 8 und rückt den Paßstift 1 in seine Arbeitsstellung. Der im Ausführungsbeispiel angewandte Druck des Mediums betrug ca. 5 bar. Da nach der Druckbeaufschlagung alle beaufschlagten Paßstifte 1 in die Arbeitsstellung gebracht sind, ist es erforderlich, die nicht benötigten und evtl. für die Lagerung des zu fixierenden Teiles hinderlichen Paßstifte in die Grundstellung zurückzuführen. Dies geschieht von Hand durch einfaches Zurückbewegen. Die jeweilige reibschlüssige Scheibe 8 verhindert ein Zurückfallen der Paßstifte bei einer Plattenanordnung, wie sie beispielsweise in Fig. 3 dargestellt ist. Der Druck des Mediums braucht nur zum Ausfahren der Paßstifte 1 in die Arbeitsstellung aufgebracht werden, also nur stoßweise.

In der Fig. 2 ist die Einrichtung nach Fig. 1 in der Arbeitsstellung dargestellt. Sie zeigt, daß die Sollbruchstelle 7 in dem Paßstift 1 in dem Bereich der Stirnseite des Grundkörpers 2 liegt und die Bohrung 4 leicht angefast ist. Grundsätzlich müssen die Paßstifte 1 nicht rund sein. Sie können auch über die ganze Länge oder in den in der Arbeitsstellung den Grundkörper 2 überragenden Abschnitt profiliert sein. Bei durchgehender Profilierung ist jedoch die Herstellung der Bohrung, die dem Profil angepaßt sein muß, aufwendig.

Die Fig. 3 zeigt die Einrichtung als Plattenausführung auf einem angedeuteten Maschinentisch 10. Es ist die Arbeitssstellung mit fixiert gelagertem Bauteil 11. Diese Fig. 3 zeigt den hier besonders flach, nämlich als Platte ausgebildeten Grundkörper 2 mit mehreren Reihen von Paßstiften 1, von denen einige zur Bildung der Lagefixierung aus dem Grundkörper 2 herausragen. Diese Reihen von Paßstiften 1 werden über jeweils getrennte Kanäle mit Pneumatikanschlüssen 5 gesteuert, d.h. jede Reihe von Paßstiften wird getrennt ausgefahren. Das hat den Vorteil, daß jeweils nur eine geringe Zahl von Paßstiften wieder in die Grundstellung verbracht werden müssen.

Es lassen sich so sehr einfach und betriebssicher z.B. Anlegepositionen für winkelförmige Teile einstellen, da die Paßstifte in ihrer Verteilung über den Grundkörper 2 ein Koordinatensystem bilden. Das hat außerdem den erheblichen Vorteil, daß für die Anordnung der zu fixierenden Teile keine weitere Maßnahme nötig ist, da der Nullpunkt festgelegt ist. Er kann auch für eine Dokumentation bei dokumentationspflichtigen Teilen in eine EDV-Anlage eingespeist und gespeichert werden.

Fig. 4 zeigt die Einrichtung als Winkelausführung auf einem angedeuteten Maschinentisch 10. Hier sind zwei Grundkörper 2 rechtwinklig zueinander auf dem Maschinentisch 10 befestigt. Diese Anordnung ist für die Aufnahme von winkelförmigen Teilen besonders vorteilhaft. Durch die genaueste Planlage des Maschinentisehes 10 und den planparallelen Teilen der genau maßgleichen Grundkörper 2 bedarf es keiner zusätzlichen Justierung.

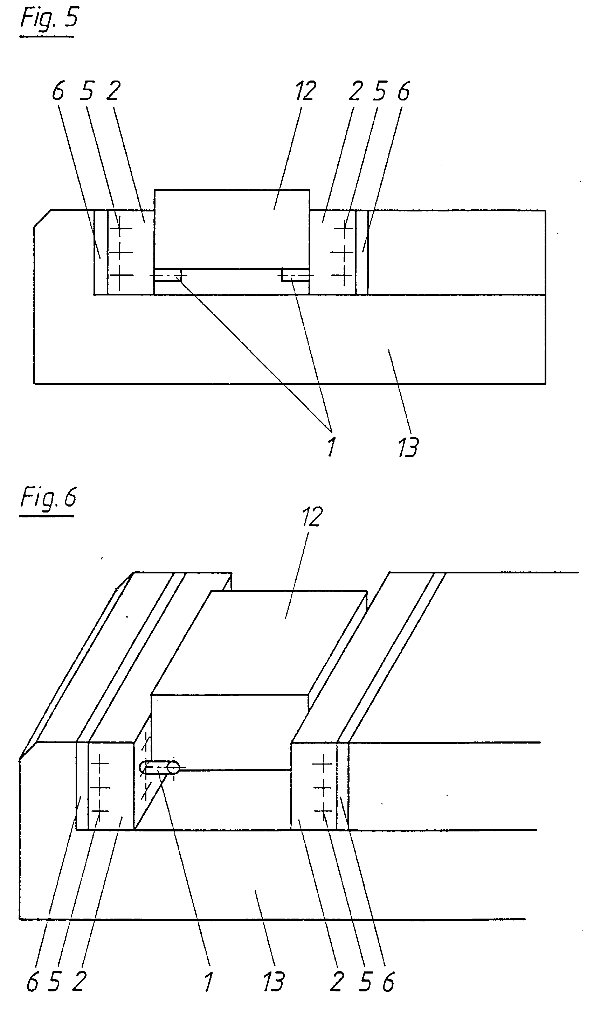

Fig. 5 zeigt eine Einrichtung als Spannbackenausführung mit fixiertem, eingelegtem Bauteil 12. An diesem Ausführungsbeispiel ist wiederzuerkennen, daß von mehreren Reihen von Paßstiften 1 mit jeweils gesonderten Anschluß 5 für das Druckmedium nur eine Reihe in Arbeitsstellung gebracht ist. Bei dieser Spannbackenausführung sind zwei gegenüberliegende Grundkörper 2 als Spannbacken in einem Schraubstock 13 angeordnet. Die Befestigung kann in dem Schraubstock 13 durch Verschraubung oder eine Schwalbenschwanzführung erfolgen. Dies ermöglicht ein Nachrüsten bei vorhandenen Schraubstöcken. Günstiger ist jedoch, die Grundkörper 2 direkt als Spannbacken in den Schraubstock 13 zu integrieren. Bei dieser Anordnung in einem Schraubstock ist es natürlich unbedingt erforderlich, daß die Reihen mit Paßstiften 1 auf exakt gleicher Höhe liegen. Evtl. erforderliche Höhen- oder Seitenkorrekturen eines Grundkörpers gegenüber dem anderen Grundkörper lassen sich bei schwalbenschwanzgeführtem Grundkörper über ein Verstellgewinde problemlos durchführen. Hierzu kann erfindungsgemäß eine Justiereinrichtung vorgesehen sein. So kann z.B. aus dem einen Grundkörper ein Lichtsignal gesendet werden, daß auf einen entsprechenden Empfänger auf den gegenüberliegenden Grundkörper trifft, sobald die Zuordnung der beiden Grundkörper stimmt. Zur Justierung können auch z.B. in den Eckpositionen eines Grundkörpers etwas längere Paßstifte angeordnet sein, während bei dem gegenüberliegenden Grundkörper diese Position nicht belegt, also Bohrungen 4 offen sind. Bei leicht konisch ausgebildeten Paßstiften in den Eckpositionen oder anderen gewählten Positionen kann die Endjustierung durch Hineinfahren der Stifte erreicht werden.

Fig. 6 zeigt die Anordnung nach Fig. 5 in perspektivischer Darstellung.

Mit der erfindungsgemäßen Einrichtung läßt sich bei relativ kurzen Rüstzeiten eine auf hundertstel genaue Lagefixierung von Teilen in Halteelementen erreichen. Die Grundkörper können dabei, wie anhand der Ausführungsbeispiele gezeigt, vielseitig verwendet werden, z.B. für Maschinentische oder als Spannbacken.

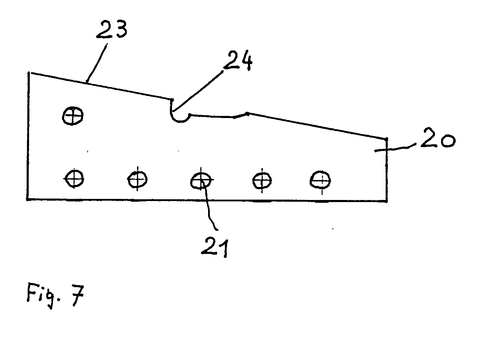

Fig. 7 zeigt eine ebene Auflageplatte 20. Diese weist im Beispiel eine Reihe von Bohrungen 21 auf, die mit der Anordnung der Paßstifte 1 in dem Grundkörper 2 der Fig. 1 bis 6 korrespondiert, so daß sie auf den Grundkörper 2 aufgesetzt werden kann. Die Auflageplatte 20 weist an der Auflagefläche 23 eine beliebige Kontur 24 auf, die von der Kontur des zu haltenden Werkstückes bestimmt ist. Die Auflageplatte 20 kann in ihrer Auflagefläche 23 auch um einen vorgegebenen Winkel geneigt sein, so daß für häufig gebrauchte Neigungen jeweils besondere Auflageplatten 20 vorhanden sein können.
Diese Auflageplatten 20 können in ihrer Kontur betriebsspezifisch hergestellt werden, so daß für häufig benötigte Konturen jeweils spezielle Auflageplatten 20 vorhanden sind, die dann nur auf die Grundkörper 2 der Einrichtungen auf die Paßstifte 1 gesetzt werden und sodann eine extrem genaue Halterung des Werkstückes bei geringer Rüstzeit ermöglichen.

## Patentansprüche

1. Einrichtung zur Lagefixierung von Teilen in Haltevorrichtungen mit mindestens einem Grundkörper und in diesem angeordneten Paßstiften,
wobei der Grundkörper (2) wenigstens eine als Werkstückanlagefläche dienende Planfläche aufweist, die von Bohrungen (4) durchsetzt ist, die in im Grundkörper ausgebildete Arbeitskammern (3) münden, die mit den Bohrungen (4) achsgleich angeordnet sind und einen größeren Durchmesser als die Bohrung (4) aufweisen,
mit Paßstiften (1), die in den Bohrungen (4) angeordnet und zwischen einer Arbeitsstellung, in der sie aus den Bohrungen heraus ragen, und einer Grundstellung, in der sie aus den Bohrungen nicht herausragen, verschiebbar gelagert sind, wobei die Paßstifte (1) von der Arbeitskammer aus durch unter Druck stehendes Medium aus ihrer Grundstellung heraus in eine Arbeitsstellung verschiebbar sind,
mit wenigstens einem in dem Grundkörper (2) vorgesehenen Druckbeaufschlagungskanal zur Zuführung des Mediums zu der Arbeitskammer,
dadurch gekennzeichnet,
dass die Arbeitskammern (3) jeweils mit lediglich einem Druckbeaufschlagungskanal verbunden sind, so daß die Paßstifte (1) zwar durch Zufuhr des Mediums aus ihrer Grundstellung in ihre Arbeitsstellung überführbar, in der sie aus dem Grundkörper herausragen, jedoch von Hand aus ihrer Arbeitsstellung in ihre Grundstellung zurück zu überführen sind, so dass zur Lagefixierung nach dem Ausfahren der Paßstifte (1) die nicht benötigten Paßstifte (1) von Hand zurückgedrückt werden.

2. Einrichtung nach Anspruch 1, dadurch gekennzeichnet, daß die Paßstifte (1) in mehreren Reihen in Bohrungen (4) angeordnet sind, und daß jede der Reihen einen eigenen Pneumatikanschluß (5) aufweist.

3. Einrichtung nach Anspruch 1 oder 2, dadurch gekennzeichnet, daß die Paßstifte jeweils eine Sollbruchstelle (7) aufweisen.

4. Einrichtung nach Anspruch 1, 2 oder 3, dadurch gekennzeichnet, daß die Paßstifte (1) in die Arbeitskammer (3) hineinragen und daß an ihrem in die Arbeitskammer (3) hineinragenden Abschnitt eine reibschlüssige Scheibe (8) angeordnet ist, die einen Kolben bildet.

5. Einrichtung nach einem der Ansprüche 1 bis 4, dadurch gekennzeichnet, daß der Grundkörper (2) an der Seite, an der die Arbeitskammern (3) angeordnet sind, mit einem Deckel (6) abgedeckt ist.

6. Einrichtung nach einem der Ansprüche 1 bis 5, dadurch gekennzeichnet, daß bei der Verwendung von zwei Grundkörpern (2) als Spannbacken eines Schraubstockes (13) einer der Grundkörper (2) einen Signalsender und der andere Grundkörper (2) einen Signalempfänger aufweist.

7. Einrichtung nach einem der Ansprüche 1 bis 5, dadurch gekennzeichnet, daß bei der Verwendung von zwei Grundkörpern (2) in mindestens einer Bohrung (4) ein längerer Paßstift (1) als in den anderen Bohrungen (4) angeordnet und die entsprechende Bohrung (4) in dem anderen Grundkörper (2) frei ist.

8. Einrichtung nach einem der Ansprüche 1 bis 7 mit mindestens einer Auflageplatte, dadurch gekennzeichnet, daß die ebene Platte (20) Bohrungen (21), die mit den Paßstiften (1) in dem Grundkörper (2) der Einrichtung korrespondieren, und eine beliebige Kontur zur Aufnahme des zu haltenden Werkstückes aufweist.

9. Einrichtung nach Anspruch 8, dadurch gekennzeichnet, daß die Auflageplatte nur eine Reihe von Bohrungen (21) aufweist.

## Claims

1. Device for positioning parts in retaining devices with at least one main body and locating pins disposed in the latter,
wherein the main body (2) has at least one plane surface which serves as a workpiece bearing surface and which has bores (4) passing through it, these bores opening into working chambers (3) which are formed in the main body, are disposed coaxially with the bores (4) and have a larger diameter than the bores (4),
with locating pins (1) which are disposed in the bores (4) and are mounted so as to be movable between a working position in which they project out of the bores and a normal position in which they do not project out of the bores, the locating pins (1) being movable out of the working chamber by pressurised medium out of their normal position and into a working position:
with at least one pressure supply channel provided in the main body (2) for delivering the medium to the working chamber,
characterised in that the working chambers (3) are each connected to only one pressure supply channel, so that by supply of the medium the locating pins (2) can be moved out of their normal position into their working position in which they project out of the main body, whereas they are to be moved back from their working position into their normal position manually, so that for the purpose of positioning after the locating pins (1) have been moved out the locating pins (1) which are not required re pushed back manually.

2. Device as claimed in Claim 1, characterised in that the locating pins (1) are disposed in several rows in bores (4) and that each of the rows has its own pneumatic connection (5).

3. Device as claimed in Claim 1 or 2, characterised in that the locating pins each have a predetermined breaking point (7).

4. Device as claimed in Claims 1, 2 or 3, characterised in that the locating pins (1) protrude into the working chamber (3) and that on the portion of the pins which protrudes into the working chamber (3) there is disposed a frictionally gripping disc (8) which forms a piston.

5. Device as claimed in one of Claims 1 to 4, characterised in that the main body (2) is covered by a cover (6) on the side on which the working chambers (3) are disposed.

6. Device as claimed in one of Claims 1 to 5, characterised in that when two main bodies (2) are used as gripping jaws of a vice (13) one of the main bodies (2) has a signal transmitter and the other main body (2) has a signal receiver.

7. Device as claimed in one of Claims 1 to 5, characterised in that when two main bodies (2) are used, a longer locating pin(1) is disposed in at least one bore (4) than in the other bores (4) and the corresponding bore (4) in the other main body (2) is free.

8. Device as claimed in one of Claims 1 to 7 with at least one bearing plate, characterised in that the level plate (20) has bores (21) which correspond to the locating pins (1) in the main body (2) of the device and has any contour in order to receive the workpiece to be held.

9. Device as claimed in Claim 8, characterised in that the bearing plate has only one row of bores (21).

## Revendications

1. Dispositif pour positionner des pièces dans des dispositif de serrage, avec au moins un corps de base et des goupilles disposées dans celui-ci, le corps de base (2) comportant au moins une surface plane servant de surface de pose pour la pièce, percée de trous (4) débouchant dans des chambres de travail (3) qui sont aménagées dans le corps de base, sont coaxiales avec les trous (4) et ont un diamètre supérieur à celui des trous (4),
avec des goupilles (1) qui sont disposées dans les trous (4) et sont montées de manière à pouvoir être déplacées entre une position de travail, dans laquelle elles font saillie hors des trous, et une position d'origine, dans laquelle elles ne font pas saillie hors des trous, les goupilles (1) pouvant être déplacées depuis la chambre de travail à l'aide d'un fluide sous pression, de leur position d'origine dans une position de travail,
avec au moins un canal d'application de pression aménagé dans le corps de base (2), pour amener le fluide à la chambre de travail,
caractérisé par le fait que les chambres de travail (3) communiquent seulement avec un canal d'application de pression, de telle sorte que les goupilles (1) peuvent être amenées par envoi de fluide de leur position d'origine dans leur position de travail, dans laquelle elles font saillie par rapport au corps de base, mais doivent être ramenées manuellement dans leur position d'origine, de sorte que pour le positionnement, une fois les goupilles (1) sorties, les goupilles (1) non utilisées doivent être repoussées manuellement.

2. Dispositif selon la revendication 1, caractérisé par le fait que les goupilles (1) sont disposées sur plusieurs rangées dans des trous (4) et par le fait que chacune des rangées comporte une liaison pneumatique (5) propre.

3. Dispositif selon la revendication 1 ou 2, caractérisé par le fait que les goupilles comportent chacune une zone de rupture (7).

4. Dispositif selon la revendication 1, 2 ou 3, caractérisé par le fait que les goupilles (1) font saillie dans la chambre de travail (3) et qu'un disque à friction (8) qui forme un piston est disposé sur leur tronçon faisant saillie dans la chambre de travail (3).

5. Dispositif selon une des revendications 1 à 4, caractérisé par le fait que le corps de base (2), sur sa face sur laquelle sont disposées les chambres de travail (3), est recouvert par un capot (6).

6. Dispositif selon une des revendications 1 à 5, caractérisé par le fait que lorsqu'on utilise deux corps de base (2) en tant que mors de serrage d'un étau (13), l'un des corps de base (2) est pourvu d'un émetteur de signal et l'autre corps de base (2) est pourvu d'un récepteur de signal.

7. Dispositif selon une des revendications 1 à 5, caractérisé par le fait que lorsqu'on utilise deux corps de base (2), au moins trou (4) contient une goupille (1) plus longue que celles placées dans les autres trous (4) et que le trou associé dans l'autre corps de base (4) est libre.

8. Dispositif selon une des revendications 1 à 7, avec au moins une plaque d'appui, caractérisé par le fait que la plaque (20) plane comporte des trous (21) qui coïncident avec les goupilles (1) dans le corps de base (2) du dispositif et présente une forme quelconque pour recevoir la pièce à tenir.

9. Dispositif selon la revendication 8, caractérisé par le fait que la plaque d'appui comporte une seule rangée de trous (21).
